# EUROPÄISCHE PATENTSCHRIFT

(11) **EP 3 067 598 B1**
(45) Veröffentlichungstag und Bekanntmachung des Hinweises auf die Patenterteilung: **22.08.2018**
(21) Anmeldenummer: 16154110.7
(22) Anmeldetag: 03.02.2016
(51) Int. Cl.: F16K 11/07, F15B 13/04

(54) **MEHRWEGEVENTIL**
MULTI-PORT VALVE
VANNE MULTI-VOIES

(30) Priorität: 13.03.2015 DE 102015204547
(43) Veröffentlichungstag der Anmeldung: 14.09.2016
(73) Patentinhaber: FESTO AG & Co. KG, 73734 Esslingen (DE)
(72) Erfinder: Kugler, Manuel, 70180 Stuttgart (DE)
(74) Vertreter: Patentanwälte Magenbauer & Kollegen Partnerschaft mbB

(56) Entgegenhaltungen:
- EP-A1- 0 472 910
- DE-A1- 3 915 366
- DE-A1- 19 615 789
- DE-A1-102013 105 321
- US-A1- 2005 211 318

## Beschreibung

Die Erfindung betrifft ein Mehrwegeventil, mit einem Ventilgehäuse, in dem sich eine längliche Gehäuseausnehmung befindet, die mit mehreren axial zueinander beabstandeten und jeweils nach radial innen weisenden ringförmigen Dichtflächen ausgestattet ist, wobei wenigstens eine der ringförmigen Dichtflächen zwischen zwei Ausnehmungsabschnitten der Gehäuseausnehmung angeordnet ist, in die jeweils mindestens ein das Ventilgehäuse durchsetzender Ventilkanal einmündet, wobei in der Gehäuseausnehmung ein eine Kolbenlängsachse aufweisender hohler Steuerkolben angeordnet ist, der zwecks Positionierung in unterschiedlichen Schaltstellungen in der Längsrichtung der Gehäuseausnehmung axial verschiebbar ist und der über eine einen Kolbenhohlraum umschließende, radial außen eine periphere Wandaußenfläche aufweisende rohrförmige Umfangswand verfügt, die mehrere mit axialem Abstand zueinander angeordnete Absperrabschnitte und zwischen wenigstens zwei axial benachbarten Absperrabschnitten einen Überströmabschnitt aufweist, wobei die Umfangswand im Bereich jedes Überströmabschnittes mindestens eine bezüglich der axial benachbarten Absperrabschnitte radial vertiefte Überströmaussparung aufweist, und wobei die rohrförmige Umfangswand des Steuerkolbens durchweg hohlzylindrisch ausgebildet ist und über eine sich ohne Abstufung auch axial über jeden Überströmabschnitt hinweg erstreckende zylindrische Wandaußenfläche verfügt, mit der der Steuerkolben gleitverschieblich an den ihn umgebenden ringförmigen Dichtflächen anliegt, wobei jede Überströmaussparung als eine in den Kolbenhohlraum einmündende fensterartige Wanddurchbrechung der Umfangswand ausgebildet ist, die sich nur ein Stückweit um die Kolbenlängsachse herum erstreckt.

Ein aus der EP 2 092 226 B1 bekanntes Mehrwegeventil ist mit einem Steuerkolben ausgestattet, der in einer länglichen Gehäuseausnehmung des Ventilgehäuses zur Positionierung in unterschiedlichen Schaltstellungen linear verschiebbar aufgenommen ist. Im Bereich des Innenumfanges der Gehäuseausnehmung sind mit axialem Abstand zueinander mehrere nach radial innen weisende ringförmige Dichtflächen angeordnet, die hier Bestandteile einzelner Dichtungsringe sind und die den Steuerkolben koaxial umschließen. Der Steuerkolben hat eine hohle Struktur und verfügt über eine einen axial durchgehenden Kolbenhohlraum umschließende rohrförmige Umfangswand, die außen in der axialen Richtung mehrfach abgestuft ist, sodass sich mehrere mit axialem Abstand zueinander angeordnete Absperrabschnitte ergeben, zwischen denen jeweils ein einen geringen Außendurchmesser aufweisender Überströmabschnitt angeordnet ist. Die Außendurchmesser der Absperrabschnitte sind so gewählt, dass sie mit den sie umschließenden Dichtflächen in Dichtkontakt stehen können. Jeder Überströmabschnitt verfügt über eine nutartig ausgebildete ringförmige Überströmaussparung, die bezüglich der axial benachbarten Absperrabschnitte radial vertieft ist, sodass sich radial zwischen einer der ringförmigen Dichtflächen und einem auf gleicher axialer Höhe angeordneten Überströmabschnitt ein Ringspalt einstellt, der es einem Fluid erlaubt, zwischen axial benachbart zueinander angeordneten Ausnehmungsabschnitten der Gehäuseausnehmung überzuströmen.

Die Ausgestaltung des Steuerkolbens als Hohlkörper hat den Vorteil einer Material- und Gewichtsersparnis, was sich grundsätzlich vorteilhaft auf die Herstellungskosten und die Umschaltgeschwindigkeiten des Steuerkolbens auswirkt. Eine noch stärkere Gewichtseinsparung wäre zwar möglich, wenn man den Steuerkolben aus einem Kunststoffmaterial herstellen würde, so wie dies beispielsweise in der DE 10 2005 048 622 B4 beschrieben ist. Dieser andere, bekannte Steuerkolben setzt jedoch voraus, dass er am Außenumfang mit ringförmigen Dichtelementen bestückt wird, was wiederum den Herstellungsaufwand vergrößert. Eine direkte Umsetzung des in der EP 2 092 226 B1 beschriebenen Steuerkolbens in einen Kunststoffkolben ist dadurch erschwert, dass die Umfangswand über mehrere Bereiche unterschiedlicher Wandstärke verfügt, die bei der Aushärtung des Kunststoffmaterials unterschiedlich stark schrumpfen, was zu einem Verzug des Steuerkolbens führen kann.

Aus der DE 196 15 789 A1 ist ein gemäß dem Oberbegriff des Anspruchs 1 aufgebautes Ventil bekannt, das über einen hohlen Steuerkolben verfügt, dessen Umfangswand einen zwischen zwei Absperrabschnitten liegenden Überströmabschnitt aufweist, in dem mehrere als fensterartige Wanddurchbrechungen ausgeführte Überströmaussparungen ausgebildet sind. Bei entsprechender Positionierung des Steuerkolbens ist durch die Überströmaussparungen und den Hohlraum des Steuerkolbens hindurch ein Fluidübertritt zwischen zwei Steuerkammern des Ventils möglich.

Die DE 39 15 366 A1 offenbart ein pneumatisches Schieberventil mit einem hohlen Ventilschieber, der stirnseitig offen ist und dessen Innenraum durch eine Wand in zwei Längenabschnitte unterteilt ist.

Aus der EP 0 472 910 A1 ist ein Ventil bekannt, das einen hohlen, spanlos gefertigten Ventilkolben aufweist.

Die US 2005/211318 A1 und die DE 10 2013 105321 A1 beschreiben auch jeweils ein Ventil mit einem hohlen Ventilkolben.

Der Erfindung liegt die Aufgabe zugrunde, Maßnahmen zu treffen, die eine kostengünstige und präzise Herstellung eines gewichtssparenden Steuerkolbens eines Mehrwegeventils ermöglichen.

Die Aufgabe wird dadurch gelöst, dass der Kolbenhohlraum durch mindestens eine schottartige Trennwand abgedichtet in mehrere axial aufeinanderfolgende Teilhohlräume unterteilt ist, wobei die Umfangswand über wenigstens zwei axial zwischen zwei Absperrabschnitten angeordnete Überströmabschnitte verfügt und die zu unterschiedlichen Überströmabschnitten gehörenden Überströmaussparungen in unterschiedliche Teilhohlräume einmünden.

Auf diese Weise lässt sich ein Mehrwegeventil mit einem Steuerkolben realisieren, wobei die periphere Umfangswand des Steuerkolbens über ihre gesamte Länge hinweg die gleiche, bevorzugt sehr dünne Wandstärke aufweist. Die rohrförmige Umfangswand ist durchweg hohlzylindrisch gestaltet und verfügt außen über eine zylindrische, bevorzugt kreiszylindrische Wandaußenfläche, die sich abstufungslos nicht nur über die Absperrabschnitte, sondern auch über den mindestens einen Überströmabschnitt hinweg erstreckt. Soweit in dem mindestens einen Überströmabschnitt eine oder mehrere radial vertiefte Überströmaussparungen vorhanden sind, sind selbige nicht als Nuten mit Nutgrund ausgeführt, sondern als fensterartige Wanddurchbrechungen ausgebildet, die die Umfangswand durchsetzen und in den von der Umfangswand umschlossenen Kolbenhohlraum einmünden. Es entfällt also jegliches Material in denjenigen Bereichen der Umfangswand, in denen sich eine Überströmaussparung befindet, was auch zur Gewichtsreduzierung beiträgt. Material wird praktisch nur dort verwendet, wo es auch tatsächlich benötigt wird, also insbesondere zur Definition der zylindrischen Absperrabschnitte und zur axialen Verbindung der Absperrabschnitte im Bereich der Überströmabschnitte. Da sich die zylindrische Wandaußenfläche auch über die Überströmabschnitte hinweg erstreckt, liegt eine den Steuerkolben umschließende, an einem Ventilgehäuse des Mehrwegeventils angeordnete ringförmige Dichtfläche auch dann an der zylindrischen Wandaußenfläche an, wenn sich ein Überströmabschnitt des Steuerkolbens in dem von der Dichtfläche umschlossenen Bereich befindet, da sich die als Überströmaussparungen fungierenden fensterartigen Wanddurchbrechungen jeweils nur ein Stückweit um die Kolbenlängsachse herum erstrecken. Damit verbunden ist ein besonders verschleißarmer Übergang der ringförmigen Dichtflächen zwischen den Überströmabschnitten und den Absperrabschnitten bei der Linearbewegung des Steuerkolbens. Nicht zuletzt wird durch die hohlzylindrische Ausgestaltung der rohrförmigen Umfangswand des Steuerkolbens ein Kolbenhohlraum gewonnen, der bei Bedarf für Zusatzfunktionen nutzbar ist, beispielsweise zur Unterbringung von Komponenten, die zu Positionserfassungszwecken und/oder zu Diagnosezwecken verwendbar sind. Die Ausgestaltung der mindestens einen Überströmaussparung als fensterartige Wanddurchbrechung der Umfangswand hat auch den Effekt, dass ein Fluid, das bei entsprechender Positionierung des Steuerkolbens durch eine Überströmaussparung hindurch zwischen zwei axial benachbarten Ausnehmungsabschnitten einer den Steuerkolben aufnehmenden Gehäuseausnehmung eines Ventilgehäuses überströmt, zumindest teilweise auch in den Kolbenhohlraum eintreten und/oder den Kolbenhohlraum durchströmen kann, was hohe Durchflussraten ermöglicht. Obgleich der Steuerkolben prinzipiell auch aus Metall oder aus einem Keramikmaterial oder einem sonstigen beliebigen Material gefertigt sein kann, begünstigt die Gestaltung der Umfangswand vor allem eine Herstellung aus Kunststoffmaterial im Rahmen eines kostengünstigen Spritzgießverfahrens. Der Kolbenhohlraum des Steuerkolbens ist durch mindestens eine schottartige Trennwand unter Abdichtung in mehrere axial aufeinanderfolgende Teilhohlräume unterteilt, wobei die Umfangswand über mehrere Überströmabschnitte verfügt. Hier ist dann eine Ausgestaltung vorgesehen, bei der die mindestens eine zu einem ersten Überströmabschnitt gehörende Überströmaussparung in einen ersten Teilhohlraum einmündet, während die zu einem weiteren Überströmabschnitt gehörende mindestens eine Überströmaussparung in einen weiteren Teilhohlraum einmündet, der von dem anderen Teilhohlraum durch mindestens eine Trennwand abgetrennt ist. Auf diese Weise kann in dem Kolbenhohlraum eine fluidische Kommunikation zwischen den Überströmaussparungen unterschiedlicher Überströmabschnitte verhindert werden.

Vorteilhafte Weiterbildungen der Erfindung gehen aus den Unteransprüchen hervor.

Um ein Mehrwegeventil mit einer 3/2-Ventilfunktion zu realisieren, ist die Umfangswand vorzugsweise so gestaltet, dass sie einen einzigen, zwischen zwei Absperrabschnitten angeordneten Überströmabschnitt aufweist. Zur Realisierung eines 5/3-Wegeventils ist die rohrförmige, hohlzylindrische Umfangswand bevorzugt so gestaltet, dass sie drei mit axialem Abstand zueinander angeordnete Absperrabschnitte aufweist, wobei zwischen axial benachbarten Absperrabschnitten jeweils ein mit mindestens einer als fensterartige Wanddurchbrechung ausgebildeten Überströmaussparung versehener Überströmabschnitt angeordnet ist.

Bevorzugt ist mindestens eine Überströmaussparung so gestaltet, dass sie sich um weniger als die Hälfte der Umfangslänge der Umfangswand in der Umfangsrichtung um die Umfangswand herum erstreckt. Die Umfangserstreckung beträgt beispielsweise 160°.

Die randseitige Außenkontur der eine Überströmaussparung bildenden fensterartigen Wanddurchbrechung ist prinzipiell beliebig. So ist beispielsweise eine vollständig oder auch nur teilweise runde Außenkontur möglich. Als besonders vorteilhaft wird allerdings eine rechteckige Außenkontur angesehen, deren Randabschnitte teils parallel und teils rechtwinkelig zur Kolbenlängsachse verlaufen, wobei die Eckbereiche abgerundet sein können.

Um eine hohe Strömungsrate bei gleichzeitig hoher Stabilität des Steuerkolbens zu ermöglichen, ist es vorteilhaft, wenn der mindestens eine Überströmabschnitt der hohlzylindrischen Umfangswand über mehrere in der Umfangsrichtung der Kolbenlängsachse verteilt angeordnete Überströmaussparungen verfügt, die jeweils als eine fensterartige Wanddurchbrechung ausgebildet sind. Vor allem auch in herstellungstechnischer Hinsicht besonders zweckmäßig wird eine Bauform angesehen, bei der der mindestens eine Überströmabschnitt über genau zwei solcher fensterartiger Wanddurchbrechungen als Überströmaussparungen verfügt, die sich bezüglich der Kolbenlängsachse diametral gegenüberliegen. Im Bereich eines mit mehreren Überströmaussparungen versehenen Überströmabschnittes erstreckt sich die hohlzylindrische Umfangswand insbesondere streifenförmig zwischen den Überströmaussparungen hindurch, wobei eine den Steuerkolben umschließende ringförmige Dichtfläche in der Lage ist, beim Umschalten des Steuerkolbens an dieser streifenförmigen Wandfläche entlangzugleiten. Verfügt ein Überströmabschnitt über mehrere Überströmaussparungen, münden zweckmäßigerweise sämtliche zum gleichen Überströmabschnitt gehörenden Überströmaussparungen in ein und denselben Teilhohlraum des Kolbenhohlraumes ein.

Die Länge des Kolbenhohlraumes kann größer sein als die axiale Länge sämtlicher Überströmabschnitte zusammen betrachtet. Ist der Kolbenhohlraum durch mindestens eine Trennwand in mehrere Teilhohlräume unterteilt, kann mindestens ein und insbesondere auch jeder Teilhohlraum in der Achsrichtung der Kolbenlängsachse eine größere Länge haben als die mit ihm kommunizierende mindestens eine Überströmaussparung.

Es ist auch eine Ausführungsform möglich, bei der die mindestens eine Überströmaussparung mindestens eines Überströmabschnittes in einen Teilhohlraum des Kolbenhohlraumes einmündet, dessen in Achsrichtung der Kolbenlängsachse gemessene Länge der entsprechend gemessenen Länge des zugeordneten Überströmabschnittes entspricht.

Mittels mindestens einer im Kolbenhohlraum angeordneten schottartigen Trennwand kann in dem Kolbenhohlraum auch mindestens ein Teilhohlraum abgeteilt werden, in den keine Überströmaussparung einmündet. Ein solcher Teilhohlraum eignet sich besonders gut zur Nutzung als Funktionsraum zur Unterbringung von Komponenten, die mit dem zu steuernden Druckmedium nicht in Berührung kommen sollten.

Der Steuerkolben kann an einer oder an beiden Stirnseiten offen sein, sodass der Kolbenhohlraum an der entsprechenden Stirnseite unverschlossen ist. Es besteht aber auch die vorteilhafte Möglichkeit, den Kolbenhohlraum an wenigstens einer und zweckmäßigerweise an jeder axialen Stirnseite durch eine mit der Umfangswand verbundene Abschlusswand zu verschließen. Eine solche Abschlusswand kann eine bezüglich der Umfangswand gesonderte und insbesondere stoffschlüssig mit der Umfangswand verbundene Komponente sein. Eine noch rationellere Herstellung des Steuerkolbens ist möglich, wenn mindestens eine Abschlusswand einstückig mit der Umfangswand ausgebildet ist und direkt bei der Urformung des Steuerkolbens gemeinsam mit dessen Umfangswand hergestellt wird. Dies kann beispielsweise durch ein Spritzgießverfahren aus Kunststoffmaterial oder mittels eines generativen Herstellungsverfahrens geschehen, wobei sich vor allem das sogenannte selektive Lasersintern als generatives Herstellungsverfahren empfiehlt.

Wie schon angeklungen ist, kann der Kolbenhohlraum mindestens einen wenigstens ein Funktionsmittel aufnehmenden Funktionsraum bilden. Mindestens ein Funktionsmittel ist beispielsweise so ausgebildet, dass es zur Positionserfassung und/oder zur Diagnose nutzbar ist. Beispielsweise kann ein Funktionsmittel ein Positionserfassungsmittel und/oder ein Sensormittel sein. Ist der Kolbenhohlraum in mehrere Teilhohlräume unterteilt, besteht die Möglichkeit, nur einen dieser Teilhohlräume oder auch mehrere oder sämtliche Teilhohlräume als einen Funktionsraum zu nutzen. Mindestens ein Funktionsraum kann auch mindestens ein von einem Ventilmittel gebildetes Funktionsmittel enthalten.

Vor allem wenn die Umfangswand des Steuerkolbens als ein Kunststoff-Spritzgießteil ausgeführt ist, ist es vorteilhaft, wenn die Umfangswand durchgängig über die gleiche Wanddicke verfügt. Selbstverständlich kann die Umfangswand in den eine fensterartige Wanddurchbrechung umrahmenden Randbereichen gleichwohl angefast und/oder abgerundet und/oder abgeschrägt sein, um ein beschädigungsfreies Hindurchfahren durch eine ringförmige Dichtfläche zu gewährleisten, die in einer den Steuerkolben aufnehmenden Gehäuseausnehmung eines Ventilgehäuses gehäusefest angeordnet ist und den Steuerkolben umschließt.

Bevorzugt besteht zumindest die Umfangswand und zweckmäßigerweise der gesamte Steuerkolben aus einem Kunststoffmaterial.

Bei dem Mehrwegeventil sind die ortsfest bezüglich des Ventilgehäuses angeordneten ringförmigen Dichtflächen zweckmäßigerweise von ringförmigen Dichtelementen gebildet, die am Ventilgehäuse fixiert sind. Diese ringförmigen Dichtelemente bestehen zweckmäßigerweise aus einem Material mit gummielastischen Eigenschaften, insbesondere aus einem Elastomermaterial. Der Steuerkolben selbst und insbesondere dessen rohrförmige Umfangswand weist keine gummielastischen Dichtelemente auf, was die Herstellung besonders vereinfacht.

Es ist von Vorteil, wenn mindestens eine und bevorzugt jede Überströmaussparung mindestens eines und bevorzugt jedes Überströmabschnittes in Achsrichtung der Kolbenlängsachse eine größere Länge hat als wenigstens eine und bevorzugt jede der ringförmigen Dichtflächen. Nimmt der Steuerkolben eine axiale Position ein, in der ein Überströmabschnitt von einer ringförmigen Dichtfläche umschlossen ist, liegt die ringförmige Dichtfläche im Bereich der Überströmaussparung frei, hat dort also keinen Kontakt zum Steuerkolben. Die Überströmaussparung ragt somit axial beidseits über die ringförmige Dichtfläche hinaus, sodass ein Fluid durch ein und dieselbe Überströmaussparung hindurch zwischen den beiden die Dichtfläche axial beidseits flankierenden Ausnehmungsabschnitten überströmen kann.

Nachfolgend wird die Erfindung anhand der beiliegenden Zeichnung näher erläutert. In dieser zeigen:
- Figur 1: eine bevorzugte Ausgestaltung eines Mehrwegeventils, das mit einem besonders vorteilhaft gestalteten Steuerkolben ausgestattet ist, in einem Längsschnitt bei einer ersten Schaltstellung des Steuerkolbens,
- Figur 2: die Anordnung aus Figur 1 in der ersten Schaltstellung des Steuerkolbens in einem Längsschnitt mit bezüglich Figur 1 um 90° verdrehter Schnittebene,
- Figur 3: das Mehrwegeventil aus Figur 1 in einer der Figur 1 entsprechenden Darstellungsweise in einer zweiten Schaltstellung des Steuerkolbens,
- Figur 4: das Mehrwegeventil in der zweiten Schaltstellung des Steuerkolbens in einer der Figur 2 entsprechenden Schnittebene,
- Fig. 5-7: jeweils eine Einzeldarstellung des aus Figuren 1 bis 4 ersichtlichen Steuerkolbens in einer isometrischen Darstellung aus unterschiedlichen Blickrichtungen,
- Figur 8: den gleichen Steuerkolben in einer isometrischen Einzeldarstellung im noch nicht angebrachten Zustand bevorzugt vorhandener stirnseitiger Abschlusswände.

- Figur 9: den aus Figuren 1 bis 8 ersichtlichen Steuerkolben in einer Einzeldarstellung im Längsschnitt mit der gleichen Schnittebene wie in Figuren 1 und 3,
- Figur 10: den Steuerkolben aus Figur 9 in einem Längsschnitt in einer bezüglich Figur 9 um 90° verdrehten Schnittebene,
- Figur 11: in einem Längsschnitt mit bezüglich Figur 9 übereinstimmender Schnittebene eine weitere vorteilhafte Ausführungsform des Steuerkolbens, und
- Figur 12: den Steuerkolben aus Figur 1 in einem Längsschnitt mit bezüglich Figur 11 um 90° verdrehter Schnittebene.

Das in der Zeichnung in einer bevorzugten Ausgestaltung illustrierte Mehrwegeventil 1 verfügt über ein Ventilgehäuse 2, in dem eine längliche Gehäuseausnehmung 3 ausgebildet ist, die über eine Längsachse 4 verfügt.

In der Gehäuseausnehmung 3 sind in koaxialer Anordnung und mit axialem Abstand zueinander mehrere ringförmige Dichtelemente 5 angeordnet. Die Dichtelemente 5 sind bezüglich des Ventilgehäuses 2 in Achsrichtung der Längsachse 4 ortsfest fixiert. Bevorzugt ist jedes Dichtelement 5 Bestandteil einer ringförmigen Dichtungseinheit 6, die koaxial zur Längsachse 4 in der Gehäuseausnehmung 3 axial unbeweglich festgelegt ist. Jede Dichtungseinheit 6 enthält zweckmäßigerweise ein ringförmiges, im Querschnitt U-förmig gestaltetes Dichtungsgehäuse 7, dessen U-Öffnung radial nach innen in Richtung zur Längsachse 4 weist und in dem jeweils eines der ringförmigen Dichtelemente 5 gehalten ist.

Die Dichtungsgehäuse 7 sind bevorzugt in die Gehäuseausnehmung 3 eingepresst und mithin kraftschlüssig an der Innenumfangsfläche 8 der Gehäuseausnehmung 3 befestigt. Andere Arten der Befestigung kommen aber ebenso in Frage, beispielsweise eine stoffschlüssige Fixierung. Mehrere oder alle Dichtungseinheiten können auch Bestandteil einer einheitlichen Dichtungsstruktur sein, die in die Gehäuseausnehmung 3 eingesetzt ist.

Die ringförmigen Dichtelemente 5 bestehen insbesondere aus einem Material mit gummielastischen Eigenschaften. Vorzugsweise sind sie aus einem Elastomermaterial gefertigt.

Jedes Dichtelement 5 definiert mit seiner radialen Innenfläche eine zur Längsachse 4 konzentrische ringförmige Dichtfläche 12. Die von den Dichtflächen 12 umrahmten Öffnungen haben vorzugsweise untereinander den gleichen Durchmesser.

Jede Dichtflächen 12 erstreckt sich zweckmäßigerweise entlang einer Kreislinie.

Zwischen axial unmittelbar benachbarten Dichtflächen 12 befindet sich jeweils ein im Folgenden als Ausnehmungsabschnitt 13 bezeichneter Längenabschnitt der Gehäuseausnehmung 3. In mehrere dieser Ausnehmungsabschnitte 13 und vorzugsweise in jeden der Ausnehmungsabschnitte 13 mündet einer von mehreren, das Ventilgehäuse 2 durchsetzenden Ventilkanälen 14 ein. Zweckmäßigerweise mündet in jeden Ausnehmungsabschnitt 13 ein eigener Ventilkanal 14. Der Mündungsbereich befindet sich insbesondere an der Innenumfangsfläche 8 der Gehäuseausnehmung 3. Jeder Ventilkanal 14 durchsetzt beim Ausführungsbeispiel die die Gehäuseausnehmung 3 peripher umschließende periphere Gehäusewand 15 und mündet mit einer Anschlussöffnung zu einer Außenfläche der peripheren Gehäusewand 15 aus.

Das Mehrwegeventil 1 des Ausführungsbeispiels ist als ein 5/2-Mehrwegeventil konzipiert. Es hat einen mittleren Ausnehmungsabschnitt 13a, in den ein Ventilkanal 14 einmündet, bei dem sich um einen im Betrieb des Mehrwegeventils 1 mit einer externen Druckfluidquelle, insbesondere mit einer Druckluftquelle, verbundenen Speisekanal 14a handelt. Zur besseren Unterscheidung sei der mittlere Ausnehmungsabschnitt 13a im Folgenden auch als erster Ausnehmungsabschnitt 13a bezeichnet.

Der erste Ausnehmungsabschnitt 13, 13a ist auf der einen Axialseite von einem zweiten Ausnehmungsabschnitt 13b und auf der anderen Axialseite von einem dritten Ausnehmungsabschnitt 13c flankiert. Der zweite Ausnehmungsabschnitt 13b kommuniziert mit einem Ventilkanal 14, der ein mit einem Verbraucher verbindbarer erster Arbeitskanal 14b ist. Der dritte Ausnehmungsabschnitt 13c ist mit einem Ventilkanal 14 verbunden, der ein ebenfalls mit einem Verbraucher verbindbarer zweiter Arbeitskanal 14c ist.

Auf den zweiten Ausnehmungsabschnitt 13b folgt ein vierter Ausnehmungsabschnitt 13d, der mit einem Ventilkanal 14 verbunden ist, bei dem es sich um einen ersten Entlastungskanal 14d handelt. Der dritte Ausnehmungsabschnitt 13c ist axial außen von einem fünften Ausnehmungsabschnitt 13e flankiert, der mit einem Ventilkanal 14 verbunden ist, bei dem es sich um einen zweiten Entlastungskanal 14e handelt. Jeder Entlastungskanal 14d, 14e ist mit einer externen Drucksenke verbunden, insbesondere mit der Atmosphäre. Wird das Mehrwegeventil 1 zur Steuerung von Druckluft verwendet, was ein bevorzugtes Anwendungsfeld ist, fungieren die Entlastungskanäle 14d, 14e als Entlüftungskanäle.

Das erfindungsgemäße Konzept lässt sich auch mit Mehrwegeventilen 1 verwirklichen, die über eine andere Ventilfunktionalität verfügen, beispielsweise über eine 4/2-Ventilfunktion, eine 5/3-Ventilfunktion oder eine 3/2-Ventilfunktion. Je nach Ventilfunktion kann die Anzahl der Dichtflächen 12, der Ausnehmungsabschnitte 13 und der mit der Gehäuseausnehmung 3 kommunizierenden Ventilkanäle 14 variieren.

In der Gehäuseausnehmung 3 erstreckt sich in koaxialer Anordnung ein Steuerkolben 16, der über eine Kolbenlängsachse 17 verfügt, die parallel zur Längsachse 4 der Gehäuseausnehmung 3 ausgerichtet ist. Bevorzugt fallen die Kolbenlängsachse 17 und die Längsachse 4 der Gehäuseausnehmung 3 zusammen.

Der Steuerkolben 16 durchsetzt sämtliche von den ringförmigen Dichtflächen 12 umgrenzten Öffnungen und ist relativ zum Ventilgehäuse 2 in Achsrichtung der Längsachse 4 linear verschiebbar. Die dabei vom Steuerkolben 16 ausführbare Linearbewegung sei im Folgenden als Umschaltbewegung 18 bezeichnet.

Die Umschaltbewegung 18 ist dadurch hervorrufbar, dass auf den Steuerkolben 16 eine Betätigungskraft ausgeübt wird. Die Art und Weise der Erzeugung dieser Betätigungskraft ist für das erfinderische Prinzip unerheblich. Beispielsweise kann die Betätigungskraft manuell und/oder elektrisch und/oder durch Fluidkraft hervorgerufen werden. Das Mehrwegeventil 1 des Ausführungsbeispiels ist ausgebildet, um den Steuerkolben 16 mittels einer fluidischen Betätigungskraft zu bewegen. Hierzu ist dem Steuerkolben 16 an beiden axialen Stirnseiten jeweils ein ebenfalls in der Gehäuseausnehmung 3 axial beweglich angeordneter Betätigungskolben 22a, 22b vorgelagert, der auf die zugewandte Stirnfläche des Steuerkolbens 16 einwirken kann.

Jeder Betätigungskolben 22a, 22b befindet sich in einem von zwei einander entgegengesetzten axialen Endabschnitten 23a, 23b der Gehäuseausnehmung 3, der axial innen von einem der Dichtelemente 5 beziehungsweise von einer der Dichtungseinheiten 6 und axial außen von einer stirnseitigen Gehäusewand 24a, 24b des Ventilgehäuses 2 begrenzt ist. Jeder Betätigungskolben 22a, 22b ist unter radialer Abdichtung axial verschiebbar im zugeordneten Endabschnitt 23a, 23b aufgenommen und begrenzt an der dem Steuerkolben 16 axial entgegengesetzten Außenseite eine Betätigungskammer 25a, 25b, in die ein das Ventilgehäuse 2 durchsetzender Steuerkanal 26a, 26b einmündet.

Durch den Steuerkanal 26a, 26b hindurch ist jede Betätigungskammer 25a, 25b gesteuert mit einem fluidischen Steuerdruckmedium beaufschlagbar, das auf den zugeordneten Betätigungskolben 22a, 22b einwirkt und auf diese Weise eine Betätigungskraft erzeugt, durch die der Betätigungskolben 22a, 22b gemeinsam mit dem von ihm beaufschlagten Steuerkolben 16 in die Richtung zur entgegengesetzten Stirnseite der Gehäuseausnehmung 3 verschoben wird.

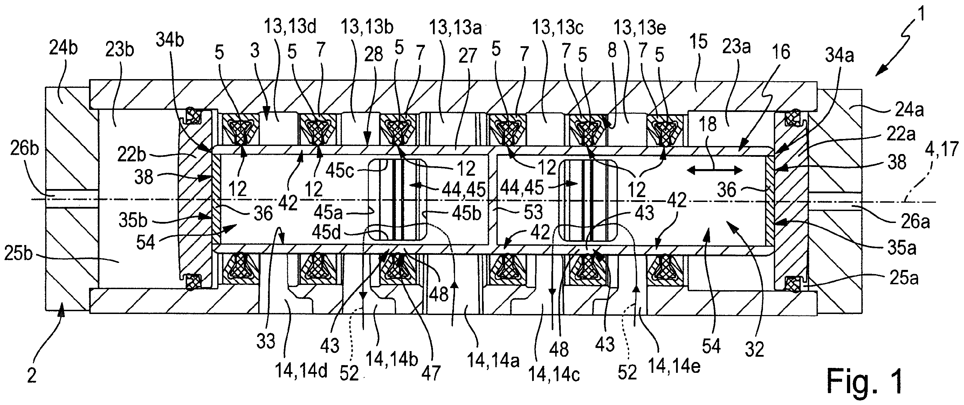

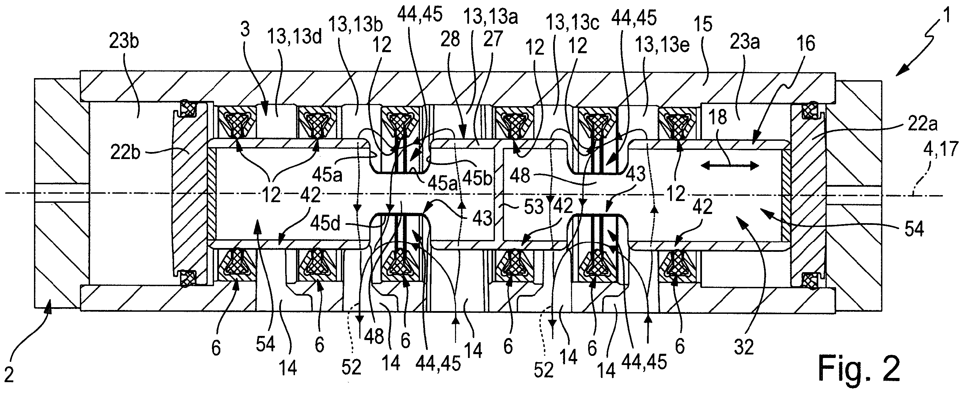

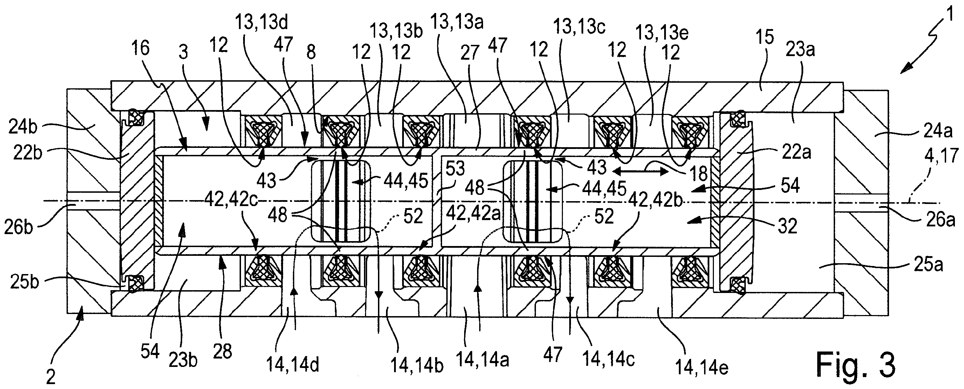

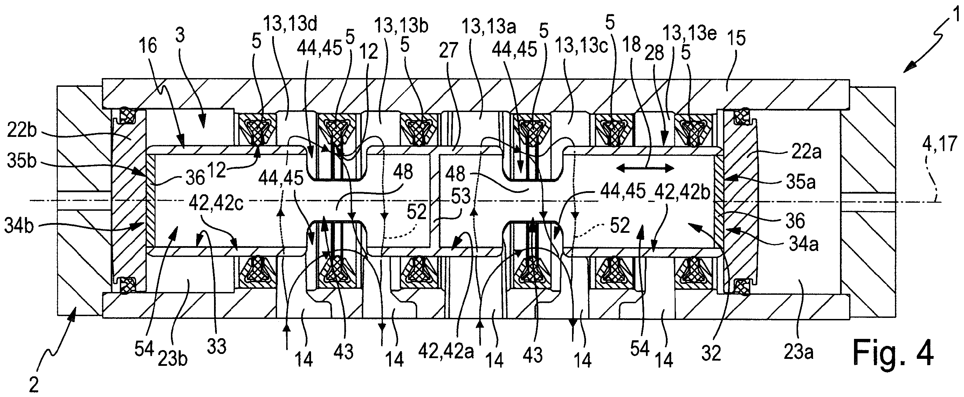

Durch aufeinander abgestimmte Fluidbeaufschlagung und Druckentlastung der beiden Betätigungskammern 25a, 25b lässt sich der Steuerkolben 16 nach Bedarf zu der Umschaltbewegung 18 in der einen oder anderen axialen Richtung antreiben, sodass er wahlweise in einer aus Figuren 1 und 2 ersichtlichen ersten Schaltstellung oder in einer aus Figuren 3 und 4 ersichtlichen zweiten Schaltstellung positionierbar ist. Die Schaltstellungen werden exemplarisch jeweils dadurch vorgegeben, dass der bei der Umschaltbewegung 18 voreilende Betätigungskolben 22a, 22b auf die ihm direkt gegenüberliegende stirnseitige Gehäusewand 24a, 24b aufläuft.

Beim Ausführungsbeispiel sind die beiden Betätigungskolben 22a, 22b als bezüglich des Steuerkolbens 16 separate Komponenten ausgebildet, die nur lose an der jeweils zugeordneten Stirnfläche des Steuerkolbens 16 anliegen und folglich nur eine drückende Kraft auf den Steuerkolben 16 ausüben können. Bei einem nicht illustrierten Ausführungsbeispiel sind die Betätigungskolben 22a, 22b fest mit dem Steuerkolben 16 verbunden.

Während beim Ausführungsbeispiel die Umschaltbewegung 18 in beiden Richtungen aktiv durch Fluidbeaufschlagung hervorrufbar ist, sieht ein nicht illustriertes Ausführungsbeispiel vor, dass der Steuerkolben 16 durch Federmittel, insbesondere durch mechanische Federmittel, in eine seiner beiden Schaltstellungen vorgespannt ist, sodass zur Ausführung der Umschaltbewegung 18 nur ein Betätigungskolben 22a, 22b benötigt wird.

Die gesteuerte Fluidbeaufschlagung der Betätigungskammern 25a, 25b kann entweder direkt erfolgen oder aber, vorzugsweise, in durch eine Vorsteuerventileinrichtung elektrofluidisch vorgesteuerter Weise. Es besteht auch die Möglichkeit, das Mehrwegeventil 1 so auszubilden, dass der Steuerkolben 16 direkt elektromagnetisch oder elektromechanisch betätigbar ist. Auch eine Ausführung zur Handbetätigung des Steuerkolbens 16 ist im Rahmen des Erfindungsgedankens möglich.

In Abhängigkeit von der Schaltstellung des Steuerkolbens 16 werden die Ausnehmungsabschnitte 13 der Gehäuseausnehmung 3 und mithin die mit diesen Ausnehmungsabschnitten 13 kommunizierenden Ventilkanäle 14 in unterschiedlichem Muster miteinander verbunden und voneinander abgetrennt. Bei dem 5/3-Mehrwegeventil 1 des Ausführungsbeispiels ist der mit dem ersten Arbeitskanal 14b kommunizierende zweite Ausnehmungsabschnitt 13b in der aus Figuren 1 und 2 ersichtlichen ersten Schaltstellung des Steuerkolbens 16 mit dem ersten Ausnehmungsabschnitt 13a fluidisch verbunden und gleichzeitig vom vierten Ausnehmungsabschnitt 13d abgetrennt, während er in der aus Figuren 3 und 4 ersichtlichen zweiten Schaltstellung von dem ersten Ausnehmungsabschnitt 13a abgetrennt und stattdessen mit dem vierten Ausnehmungsabschnitt 13d fluidisch verbunden und dadurch druckmäßig entlastet ist. Mit dem dritten Ausnehmungsabschnitt 13c, der mit dem zweiten Arbeitskanal 14c kommuniziert, verhält es sich gerade umgekehrt. Er ist in der ersten Schaltstellung vom ersten Ausnehmungsabschnitt 13a und mithin von der Druckfluidquelle abgetrennt und gleichzeitig mit dem fünften Ausnehmungsabschnitt 13e verbunden, sodass er druckmäßig entlastet wird. In der aus Figuren 3 und 4 ersichtlichen zweiten Schaltstellung des Steuerkolbens 16 ist der dritte Ausnehmungsabschnitt 13c und mithin der zweite Arbeitskanal 14c von dem fünften Ausnehmungsabschnitt 13e abgetrennt und gleichzeitig mit dem ersten Ausnehmungsabschnitt 13a und folglich mit der Druckfluidquelle verbunden.

Verantwortlich für das sich jeweils einstellende fluidische Verbindungsmuster ist die Gestaltung des Steuerkolbens 16, die im Folgenden näher beschrieben wird.

Der Steuerkolben 16 hat eine Längserstreckung und ist hohl ausgebildet. Er verfügt über eine zu der Kolbenlängsachse 17 koaxiale rohrförmige Umfangswand 27, die an ihrer von der Kolbenlängsachse 17 radial wegweisenden Außenseite eine periphere Wandaußenfläche 28 definiert. Eine Besonderheit der rohrförmigen Umfangswand 27 besteht darin, dass sie durchweg, also insbesondere über ihre gesamte axiale Länge hinweg, hohlzylindrisch ausgebildet ist. Dies hat zur Folge, dass die Wandaußenfläche 28, ohne abgestuft zu sein, eine zylindrische Gestaltung hat. Mit anderen Worten hat die Wandaußenfläche 28 insbesondere die Gestalt der Mantelfläche eines Zylinders. Bevorzugt ist die Formgebung kreiszylindrisch. Die Umfangswand 27 umschließt peripher einen im Folgenden als Kolbenhohlraum 32 bezeichneten internen Kolbenhohlraum 32 des Steuerkolbens 16. Die unmittelbare radiale Begrenzung des Kolbenhohlraumes 32 übernimmt eine der Kolbenlängsachse 17 radial zugewandte zylindrische Wandinnenfläche 33 der Umfangswand 27. Da auch die Wandinnenfläche 33 über ihre gesamte Länge hinweg keine Abstufung aufweist, verfügt die Umfangswand 27 zweckmäßigerweise durchgängig über die gleiche radiale Wanddicke.

Die Umfangswand 27 erstreckt sich axial zwischen den beiden einander entgegengesetzten Stirnseiten 34a, 34b des Steuerkolbens 16. Bevorzugt definiert jede der beiden axial orientierten ringförmigen Stirnflächen der hohlzylindrischen Umfangswand 27 zumindest eine Teilfläche der Stirnfläche 35a, 35b des Steuerkolbens 16 an der betreffenden Stirnseite 34a, 34b.

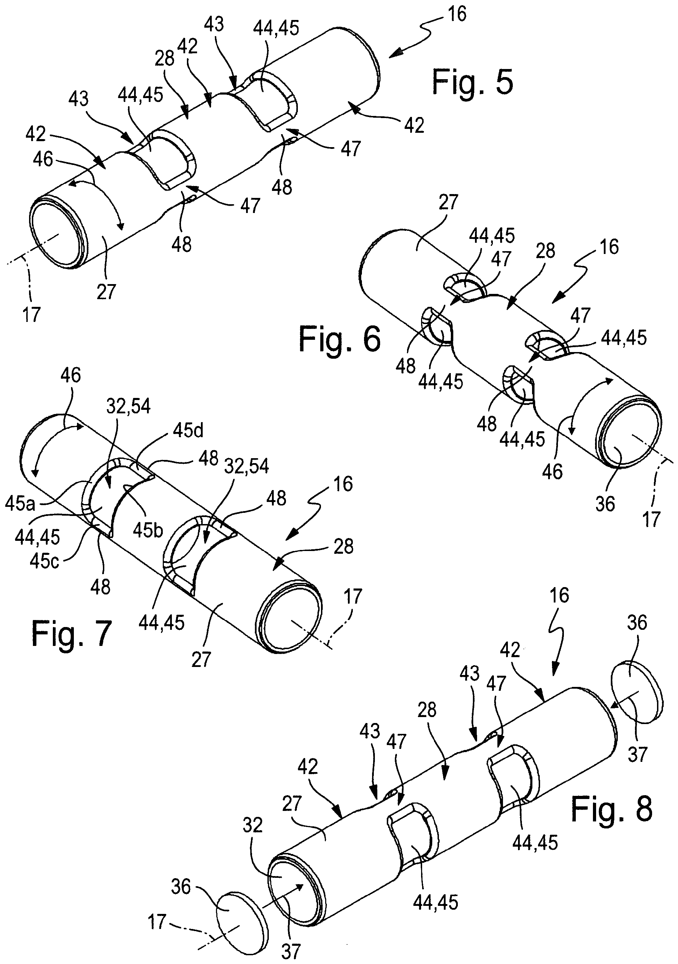

Bei einem nicht illustrierten Ausführungsbeispiel ist der Kolbenhohlraum 32 an wenigstens einer und insbesondere an beiden Stirnseiten 34a, 34b des Steuerkolbens 16 offen. Als für die meisten Anwendungsfälle vorteilhafter wird jedoch die bei den Ausführungsbeispielen realisierte Gestaltung angesehen, bei denen der Kolbenhohlraum 32 an beiden axialen Stirnseiten 34a, 34b mittels einer mit der Umfangswand 27 verbundenen Abschlusswand 36 verschlossen ist. Jede Abschlusswand 36 kann, wie dies beim Ausführungsbeispiel der Figuren 1 bis 10 der Fall ist, eine ursprünglich bezüglich der Umfangswand 27 gesonderte Komponente sein, was insbesondere auch in Figur 8 zum Ausdruck kommt, die den Steuerkolben 16 im noch nicht an der Umfangswand 27 befestigten Zustand der beiden Abschlusswände 36 zeigt. Bei der Montage werden die Abschlusswände 36 gemäß Pfeilen 37 stirnseitig an die hohlzylindrische Umfangswand 27 angesetzt und/oder in den Kolbenhohlraum 32 eingesetzt und bei diesem An- bzw. Einsetzen oder anschließend auf eine geeignete Weise mit der Umfangswand 27 verbunden.

Bevorzugt sind die Abschlusswände 36 stoffschlüssig an der Umfangswand 27 fixiert, was beispielsweise durch Verkleben oder Verschweißen realisiert ist. Bestehen die Umfangswand 27 und die Abschlusswände 36, was bevorzugt der Fall ist, aus einem Kunststoffmaterial, können die Abschlusswände 36 vorteilhaft durch Laserschweißen an der Umfangswand 27 fixiert werden. Jedenfalls ist es von Vorteil, wenn die Verbindung zwischen den Abschlusswänden 36 und der Umfangswand 27 eine dichte Verbindung ist, sodass der Kolbenhohlraum 32 durch jede Abschlusswand 36 abgedichtet verschlossen wird.

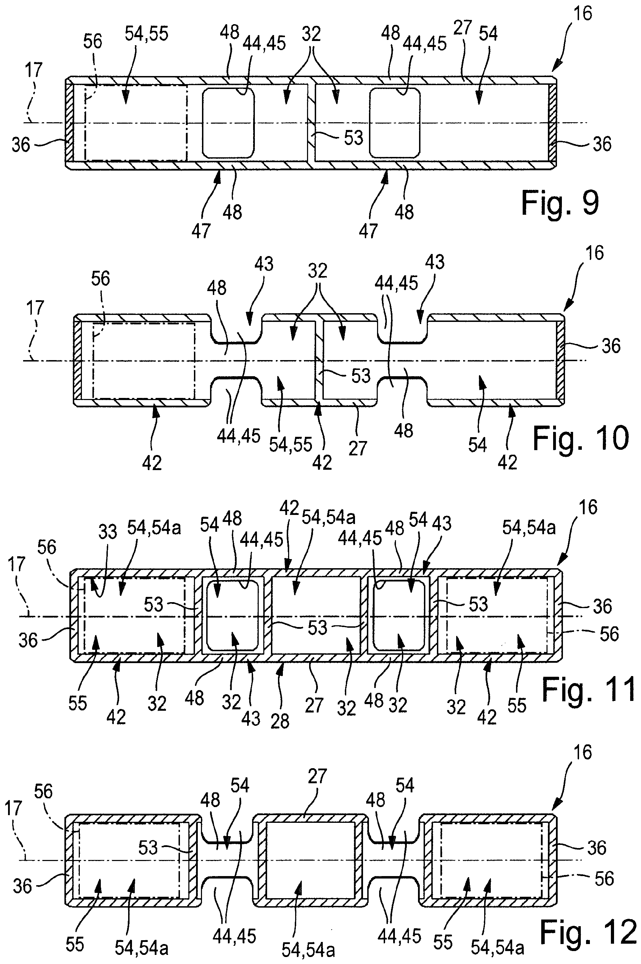

Bei einem nicht gezeigten Ausführungsbeispiel ist mindestens eine Abschlusswand 36 zusätzlich oder alternativ zu den geschilderten Befestigungsmaßnahmen formschlüssig an der Umfangswand 27 befestigt. Sie kann beispielsweise im Rahmen einer Rastverbindung fixiert sein. Eine andere Art zur festen Verbindung der Abschlusswände 36 mit der Umfangswand 27 besteht in einer einstückigen Verbindung zwischen den Abschlusswänden 36 und der Umfangswand 27. Ein solches Ausführungsbeispiel ist in den Figuren 11 und 12 illustriert. Hier sind die Umfangswand 27 und jede Abschlusswand 36 unmittelbar bei ihrer Herstellung als eine einstückige Struktur geformt. Die Herstellung erfolgt beispielsweise durch Spritzgießen oder vorzugsweise im Rahmen eines generativen Fertigungsverfahrens.

Die Wanddicke der Abschlusswände 36 entspricht zweckmäßigerweise der Wanddicke der hohlzylindrischen Umfangswand 27.

Zweckmäßigerweise sind die Abschlusswände 36 scheibenförmig gestaltet. Im Falle einer bezüglich der Umfangswand 27 separaten Ausgestaltung kann man sie auch als Abschlussdeckel bezeichnen.

Die Abschlusswände 36 sind insbesondere derart ausgebildet und angeordnet, dass ihre vom Kolbenhohlraum 32 axial abgewandte Außenfläche 38 die zugeordnete Stirnfläche 35a, 35b des Steuerkolbens 16 bildet. Exemplarisch sind die Abschlusswände 36 so axial in die Umfangswand 27 eingesetzt, dass ihre Außenfläche 38 bündig mit der benachbarten ringförmigen Stirnfläche der Umfangswand 27 verläuft.

Die den Steuerkolben 16 umschließenden gehäusefesten Dichtflächen 12 liegen gleitverschieblich an der zylindrischen Wandaußenfläche 28 der Umfangswand 27 an. Zweckmäßigerweise ist der Steuerkolben 16 so gestaltet, dass unabhängig von seiner Schaltstellung stets sämtliche ringförmigen Dichtflächen 12 mit Dichtkontakt an der Wandaußenfläche 28 anliegen. Führt der Steuerkolben 16 eine Umschaltbewegung 18 aus, gleitet er mit seiner zylindrischen Wandaußenfläche 28 an den ihn umschließenden ringförmigen Dichtflächen 12 entlang.

Die Umfangswand 27 des Steuerkolbens 16 weist mehrere in Achsrichtung der Kolbenlängsachse 17 aufeinanderfolgend angeordnete Längenabschnitte auf, die einstückig ineinander übergehen und die zur besseren Unterscheidung und unter Berücksichtigung ihrer Funktion als Absperrabschnitte 42 und als Überströmabschnitte 43 bezeichnet werden. Die Absperrabschnitte 42 und Überströmabschnitte 43 sind in abwechselnder Reihenfolge aneinandergereiht. So folgt in der Längsrichtung der Kolbenlängsachse 17 auf jeden Absperrabschnitt 42 ein Überströmabschnitt 43, auf den wiederum ein Absperrabschnitt 42 folgt. Die Anzahl der Absperrabschnitte 42 und der Überströmabschnitte 43 hängt von der gewünschten Funktionalität des Mehrwegeventils 1 ab. Bei einer Ausführung als 5/2-Mehrwegeventil enthält die Umfangswand 27 einen mittleren Absperrabschnitt 42, 42a, der axial beidseits von je einem Überströmabschnitt 43 flankiert ist, auf den seinerseits jeweils einer von zwei äußeren Absperrabschnitten 42, 42b, 42c folgt.

Ein über eine 3/2-Funktionalität verfügendes Mehrwegeventil 1 würde zweckmäßigerweise nur einen einzigen Überströmabschnitt 43 aufweisen, der axial beidseits von je einem Absperrabschnitt 42 flankiert ist.

Im Bereich jedes Absperrabschnittes 42 ist die hohlzylindrische Umfangswand 27 geschlossen und undurchbrochen. Mit anderen Worten ist auch die zylindrische Wandaußenfläche 33 im Bereich aller Absperrabschnitte 42 eine in sich geschlossene Zylindermantelfläche. Im Bereich eines jeden Überströmabschnittes 43 ist die Umfangswand 27 hingegen jeweils einfach oder mehrfach radial durchbrochen. Sie verfügt dort über jeweils mindestens eine fensterartige Wanddurchbrechung 44, die die Umfangswand 27 radial durchsetzt und in den Kolbenhohlraum 32 einmündet. Jede der fensterartigen Wanddurchbrechungen 44 stellt also eine Verbindung her zwischen dem Kolbenhohlraum 32 und dem den Steuerkolben 16 peripher umgebenden Bereich der Gehäuseausnehmung 3. Aufgrund ihrer Funktion sei jede fensterartige Wanddurchbrechung 44 allgemein auch als Überströmaussparung 45 bezeichnet. Wenn in dieser Beschreibung von einer Überströmaussparung 45 die Rede ist, ist damit eine die Umfangswand 27 zwischen der Wandaußenfläche 28 und der Wandinnenfläche 33 durchsetzende fensterartige Wanddurchbrechung 44 gemeint.

Da die Umfangswand 27 durch die Überströmaussparungen 45 jeweils durchgehend zwischen der Wandaußenfläche 28 und der Wandinnenfläche 33 durchbrochen ist, kann man auch sagen, dass die Umfangswand 27 im Bereich jeder Überströmaussparung 45 bezüglich der axial benachbarten Absperrabschnitte 42 radial vertieft ist. Es handelt sich allerdings nicht um eine nutartige Vertiefung mit einer die Vertiefung radial begrenzenden Grundfläche, sondern die Vertiefung ist in der Form einer fensterartigen Wanddurchbrechung 44 ausgeführt, die keine radiale Grundfläche aufweist und die die Umfangswand 27 lokal durchsetzt.

Jede Überströmaussparung 45 ist allerdings in der in Figuren 5 bis 7 jeweils durch einen Doppelpfeil angedeuteten Umfangsrichtung 46 der Umfangswand 27 begrenzt. Bei der vorgenannten Umfangsrichtung 46 handelt es sich um die Richtung rings um die Kolbenlängsachse 17 herum. Ein Resultat dieser Ausgestaltung besteht darin, dass sich die Wandaußenfläche 28 der Umfangswand 27 auch axial über jeden Überströmabschnitt 43 hinweg erstreckt. Dort, wo sich eine Überströmaussparung 45 befindet, ist die Wandaußenfläche 28 jedoch durchbrochen. Im Ergebnis führt dies dazu, dass sich die Wandaußenfläche 28 mit jeweils mindestens einem gekrümmten und bevorzugt streifenförmigen Außenflächenabschnitt 47 über einen jeweiligen Überströmabschnitt 43 hinweg erstreckt. Diese Außenflächenabschnitte 47 gehen direkt in die zu den Absperrabschnitten 42 gehörenden Außenflächenabschnitte der Wandaußenfläche 28 über.

Bei den Ausführungsbeispielen verfügt die Umfangswand 27 in jedem Überströmabschnitt 43 über mindestens einen stegartigen Überbrückungsabschnitt 48, der die zwei den betreffenden Überströmabschnitt 43 flankierenden Absperrabschnitte 42 einstückig miteinander verbindet. Jeder dieser stegartigen Überbrückungsabschnitte 48 bildet eine randseitige Begrenzung mindestens einer Überströmaussparung 45 an der in der Umfangsrichtung 46 orientierten Seite. Die axiale Begrenzung der Überströmaussparungen 45 übernehmen die den Überströmabschnitt 43 axial flankierenden Absperrabschnitte 42, wobei die entsprechenden Randbereiche entsprechend der Umfangskontur der Umfangswand 27 gekrümmt sind. Die streifenförmigen Außenflächenabschnitte 47 sind von den radialen Außenflächen der stegartigen Überbrückungsabschnitte 48 gebildet.

Bei den Ausführungsbeispielen weist jeder Überströmabschnitt 43 mehrere fensterartige Wanddurchbrechungen 44 beziehungsweise Überströmaussparungen 45 auf, die in der Umfangsrichtung 46 rings um die Kolbenlängsachse 17 herum verteilt angeordnet sind. Im konkret abgebildeten bevorzugten Fall verfügt jeder Überströmabschnitt 43 über genau zwei Überströmaussparungen 45. Die mehreren Überströmaussparungen 45 eines jeden Überströmabschnittes 43 sind zweckmäßigerweise in gleichmäßiger Verteilung um die Kolbenlängsachse 17 herum angeordnet, wobei sich beim Ausführungsbeispiel die beiden Überströmaussparungen 45 jedes Überströmabschnittes 43 diametral bezüglich der Kolbenlängsachse 17 gegenüberliegen.

In der Umfangsrichtung 46 zwischen jeweils aufeinanderfolgenden Überströmaussparungen 45 befindet sich jeweils ein stegartiger Überbrückungsabschnitt 48 der schon beschriebenen Art, der die beiden den Überströmabschnitt 43 axial flankierenden Absperrabschnitte 42 einstückig und stufenlos miteinander verbindet.

Jede Überströmaussparung 45 hat zweckmäßigerweise in der Umfangsrichtung 46 eine Längserstreckung, die weniger als 180° einnimmt. Beispielsweise erstreckt sich jede Überströmaussparung 45 entlang eines Bogenwinkels von 150° bis 160°.

Abweichend von den Ausführungsbeispielen können pro Überströmabschnitt 43 auch mehr als zwei in der Umfangsrichtung 46 verteilte Überströmaussparungen 45 vorhanden sein. Ebenso besteht die Möglichkeit, nur eine Überströmaussparung 45 pro Überströmabschnitt 43 vorzusehen, der sich dann aber zweckmäßigerweise, um weiterhin einen möglichst großen Strömungsquerschnitt freizugeben, über einen Bogenwinkel von mehr als 180° um die Kolbenlängsachse 17 herum erstreckt.

Alle zum gleichen Überströmabschnitt 43 gehörenden Überströmaussparungen 45 liegen zweckmäßigerweise in Achsrichtung der Kolbenlängsachse 17 auf gleicher Höhe. Außerdem sind die zum gleichen Überströmabschnitt 43 gehörenden mehreren Überströmaussparungen 45 zweckmäßigerweise untereinander gleich gestaltet, wobei sie insbesondere sowohl die gleiche Umfangserstreckung in der Umfangsrichtung 46 als auch die gleiche Längserstreckung in der Achsrichtung der Kolbenlängsachse 17 haben.

Bevorzugt haben die Überströmaussparungen 45 jeweils eine rechteckige Außenkontur. Sie sind dabei jeweils von zwei sich in Achsrichtung der Kolbenlängsachse 17 gegenüberliegenden ersten und zweiten Randflächen 45a, 45b begrenzt und ferner von zwei sich in der Umfangsrichtung 46 gegenüberliegenden dritten und vierten Randflächen 45c, 45d. In bezüglich der Kolbenlängsachse 17 radialer Richtung betrachtet, beschreiben die vier Randflächen 45a-45d den Umriss eines Rechteckes, was insbesondere aus den Figuren 1, 3, 9 und 11 ersichtlich ist. Die Eckbereiche des Rechteckes sind zweckmäßigerweise abgerundet.

Die ersten und zweiten Randflächen 45a, 45b sind von den Rändern der den Überströmabschnitt 43 flankierenden Absperrabschnitte 42 gebildet, die dritten und vierten Randflächen 45c, 45d von den Randflächen der stegartigen Überbrückungsabschnitte 48.

Um beim Umschalten des Steuerkolbens 16 den Verschleiß der Dichtflächen 12 möglichst gering zu halten, sind die die Überströmaussparungen 45 begrenzenden Randflächen 45a, 45b, 45c, 45d zweckmäßigerweise angefast und/oder abgeschrägt und/oder abgerundet. Auf diese Weise ergibt sich ein sanfter Übergang zu der Wandaußenfläche 28.

Bei nicht abgebildeten Ausführungsbeispielen des Steuerkolbens haben die Überströmaussparungen 45 andere als die abgebildeten Umrisse und sind beispielsweise oval oder kreisförmig oder auch polygonförmig mit mehr als vier Eckebereichen ausgeführt.

Befindet sich ein Absperrabschnitt 42 in einer derartigen Axialposition, dass er von einer ringförmigen Dichtfläche 12 unter Abdichtung umschlossen ist, werden durch den hierbei vorliegenden Dichtkontakt die beiden die Dichtfläche 12 auf axial entgegengesetzten Seiten flankierenden Ausnehmungsabschnitte 13 fluiddicht voneinander abgetrennt. Der Absperrabschnitt 42 sperrt also die entsprechende Fluidverbindung zwischen diesen beiden Ausnehmungsabschnitten 13 ab.

Befindet sich ein Überströmabschnitt 43 in einer derartigen Axialposition, dass er von einer ringförmigen Dichtfläche 12 umschlossen ist, steht die betreffende Dichtfläche 12 lediglich mit dem mindestens einen streifenförmigen Außenflächenabschnitt 47 des mindestens einen stegartigen Überbrückungsabschnittes 48 in Dichtkontakt. Im Bereich der Überströmaussparung(en) 45 des betreffenden Überströmabschnittes 43 liegt die Dichtfläche 12 frei. Da die betreffende Überströmaussparung 45 in Achsrichtung der Kolbenlängsachse 17 eine größere Länge hat als die zugeordnete Dichtfläche 12 und die Überströmaussparung 45 axial beidseits über die Dichtfläche 12 hinausragt, stellt die betreffende Überströmaussparung 45 eine freie Fluidverbindung zwischen den beiden die zugeordnete Dichtfläche 12 axial beidseits flankierenden Ausnehmungsabschnitten 13 her. Auf diese Weise kann das fluidische Druckmedium zwischen diesen beiden Ausnehmungsabschnitten 13 überströmen. Das überströmende Druckmedium kann dabei nicht nur unmittelbar durch die Überströmaussparung 45 hindurchströmen, sondern auch in den mit der Überströmaussparung 45 kommunizierenden Kolbenhohlraum 32 eintreten. Das Druckmedium hat also die vorteilhafte Möglichkeit, unter anderem auch dadurch zwischen zwei Ausnehmungsabschnitten 13 überzuströmen, dass es durch eine der Überströmaussparungen 45 hindurch in den Kolbenhohlraum 32 eintritt und durch die gleiche und/oder eine andere Überströmaussparung 45 des gleichen Überströmabschnittes 43 hindurch wieder zum anderen Ausnehmungsabschnitt 13 hin austritt.

Auf diese Weise wird durch die besonders gestalteten Überströmabschnitte 43 eine sehr hohe Strömungsrate beim Fluidübertritt ermöglicht.

In den Figuren 1 bis 4 sind mit Strömungspfeilen 52 mögliche Strömungsverläufe des Druckmediums beim Durchströmen der Überströmaussparungen 45 angedeutet.

Der Steuerkolben 16 ist vorzugsweise so ausgebildet, dass zu ein und demselben Überströmabschnitt 43 gehörende Überströmaussparungen 45 im Innern des Steuerkolbens 16 nicht mit dem eventuell vorhandenen, mindestens einen weiteren Überströmabschnitt 43 in Fluidverbindung stehen.

Die gegenseitige fluiddichte Abtrennung zwischen zu unterschiedlichen Überströmabschnitten 43 gehörenden Überströmaussparungen 45 erfolgt vorzugsweise dadurch, dass in dem Kolbenhohlraum 32 mindestens eine Trennwand 53 angeordnet ist, die nach Art einer Schottwand eine gegenseitig abgedichtete Unterteilung des Kolbenhohlraumes 32 in mehrere axial aufeinanderfolgende Teilhohlräume 54 hervorruft. Die Anzahl und die Platzierung der Trennwände 53 erfolgt derart, dass diejenigen Bereiche des Kolbenhohlraumes 32, in die die Überströmaussparungen 45 unterschiedlicher Überströmabschnitte 43 einmünden, fluiddicht voneinander abgetrennt sind. Sämtliche zum gleichen Überströmabschnitt 43 gehörenden Überströmaussparungen 45 münden dabei in ein und denselben Teilhohlraum 54 ein.

Beim Ausführungsbeispiel der Figuren 1 bis 10, dessen Steuerkolben 16 über genau zwei axial beabstandete Überströmabschnitte 43 verfügt, befindet sich in dem Kolbenhohlraum 32 axial zwischen den beiden Überströmabschnitten 43 eine Trennwand 53 der vorgenannten Art, sodass hier der Kolbenhohlraum 32 in zwei fluiddicht voneinander abgetrennte Teilhohlräume 54 unterteilt ist. Axial außen sind diese beiden Teilhohlräume 54 bevorzugt durch die weiter oben erläuterten Abschlusswände 36 fluiddicht verschlossen.

Verfügt der Steuerkolben 16 über nur einen Überströmabschnitt 43, ist der Kolbenhohlraum 32 zweckmäßigerweise ununterteilt.

Jede Trennwand 53 ist zweckmäßigerweise plattenförmig ausgebildet. Ihre Wanddicke ist zweckmäßigerweise die gleiche wie die Wanddicke der Umfangswand 27.

Von Vorteil ist es, wenn mindestens eine und zweckmäßigerweise jede Trennwand 53 einstückig mit der Umfangswand 27 ausgebildet ist. Sie kann beispielsweise bei der Spritzgießherstellung oder bei einer generativen Herstellung des Steuerkolbens 16 unmittelbar einstückig mit der Umfangswand 27 ausgebildet werden. Alternativ besteht allerdings auch die Möglichkeit, mindestens eine Trennwand 53 als bezüglich der Umfangwand 27 separate Komponente auszubilden, die durch geeignete Befestigungsmaßnahmen an der gewünschten Stelle im Kolbenhohlraum 32 fixiert ist, insbesondere stoffschlüssig durch Verkleben oder durch Verschweißen, beispielsweise Laserstrahlschweißen.

Das Ausführungsbeispiel der Figuren 11 und 12 macht deutlich, dass die Anzahl der im Kolbenhohlraum 32 mit axialem Abstand zueinander angeordneten Trennwände 53 prinzipiell beliebig ist. Dementsprechend lässt sich in Abhängigkeit von der verwendeten Anzahl von Trennwänden 53 eine praktisch beliebige Anzahl von Teilhohlräumen 54 ausbilden, die in Achsrichtung der Kolbenlängsachse 17 aufeinanderfolgend angeordnet sind.

Aus den Illustrationen der Figuren 11 und 12 geht unter anderem hervor, dass der Kolbenhohlraum 32 durch entsprechende Platzierung einer oder mehrerer Trennwände 53 auch derart unterteilbar ist, dass sich mindestens ein Teilhohlraum 54, 54a ergibt, in den keine Überströmaussparung 45 einmündet. Ein solcher Teilhohlraum 54a ist peripher durch die Umfangswand 27 und axial durch entweder zwei Trennwände 53 oder eine Trennwand 53 und eine Abschlusswand 36 zweckmäßigerweise hermetisch dicht abgeschlossen.

Ein nicht mit einer Überströmaussparung 45 in Fluidverbindung stehender Teilhohlraum 54, 54a eignet sich besonders gut zur Nutzung als ein Funktionsraum 55, in dem mindestens ein strichpunktiert angedeutetes Funktionsmittel 56 untergebracht ist. Bei dem Funktionsmittel 56 kann es sich beispielsweise um ein Positionserfassungsmittel handeln, beispielsweise um einen Permanentmagneten, der nutzbar ist, um die Schaltstellung des Steuerkolbens 16 berührungslos zu detektieren. Als weitere Beispiele für ein Funktionsmittel 56 können Sensormittel oder auch Ventilmittel genannt werden. Sensormittel können beispielsweise genutzt werden, um Fluiddrücke zu erfassen.

Es können allerdings nicht nur von den Überströmaussparungen 45 abgetrennte Teilhohlräume 54 als Funktionsräume 55 genutzt werden. Auch jeder mit einer Überströmaussparung 45 kommunizierende Teilhohlraum 54 eignet sich als ein Funktionsraum 55, was in den Figuren 9 und 10 illustriert ist. Hier ist gezeigt, wie mindestens ein Teilhohlraum 54, in den mehrere Überströmaussparungen 45 einmünden, als ein Funktionsraum 55 genutzt wird, der mit mindestens einem Funktionsmittel 56 bestückt ist.

Die axiale Länge der Teilhohlräume 54 ist prinzipiell beliebig. Mindestens ein Teilhohlraum 54, in den mindestens eine Überströmaussparung 45 einmündet, kann ohne weiteres eine größere axiale Länge als der zugeordnete Überströmabschnitt 43 haben, was auf das Ausführungsbeispiel der Figuren 1 bis 10 zutrifft. Das Ausführungsbeispiel der Figuren 11 und 12 verdeutlicht, dass die axiale Länge eines mit mindestens einer Überströmaussparung 45 kommunizierenden Teilhohlraumes 54 auch genau der Länge des zugeordneten Überströmabschnittes 43 entsprechen kann. In diesem Fall ist in jedem Übergangsbereich zwischen einem Überströmabschnitt 43 und den ihn flankierenden Absperrabschnitten 42 eine Trennwand 53 angeordnet.

Zumindest die Umfangswand 27 des Steuerkolbens 16 besteht zweckmäßigerweise aus einem Kunststoffmaterial. Bevorzugt sind aber auch alle anderen Komponenten des Steuerkolbens 16, also auch die gegebenenfalls vorhandenen Abschlusswände 36 und Trennwände 53, aus einem Kunststoffmaterial gefertigt, insbesondere aus dem gleichen Kunststoffmaterial wie die Umfangswand 27.

Der Steuerkolben 16 lässt sich in vorteilhafter Weise mit geringem Materialeinsatz und geringem Gewicht sehr kostengünstig herstellen. Die Umfangswand 27 besitzt zweckmäßigerweise über die gesamte Länge hinweg die gleiche Wandstärke, die relativ dünn ausgeführt werden kann, sodass sich eine sehr niedrige bewegte Masse ergibt. Da die für den Fluidübertritt zwischen benachbarten Ausnehmungsabschnitten 13 vorgesehenen Überströmaussparungen 45 keine nutartigen Vertiefungen sind, sondern in Form von Wanddurchbrechungen 44 der Umfangswand 27 realisiert sind, ist im Vergleich zum Stand der Technik eine besonders gravierende Materialeinsparung und Gewichtseinsparung möglich. Die fensterartigen Wanddurchbrechungen 44 haben den Effekt, dass das zu steuernde fluidische Druckmedium beim Übertritt zwischen zwei benachbarten Ausnehmungsabschnitten 13 nicht außen am Steuerkolben 16 vorbeistreicht, sondern durch den Steuerkolben 16 beziehungsweise durch dessen Kolbenhohlraum 32 hindurchgeführt wird. Auf diese Weise ist ein besonders effektiver Strömungsverlauf mit hohem Durchsatz realisierbar.

Zusammengefasst wird es als besonders zweckmäßig erachtet, ein Mehrwegeventil 1 zu realisieren, das ein Ventilgehäuse 2 aufweist, in dem sich eine längliche Gehäuseausnehmung 3 befindet, die mit mehreren axial zueinander beabstandeten und jeweils nach radial innen weisenden ringförmigen Dichtflächen 12 ausgestattet ist, wobei wenigstens eine der ringförmigen Dichtflächen 12 zwischen zwei Ausnehmungsabschnitten 13 der Gehäuseausnehmung 3 angeordnet ist, in die jeweils mindestens ein das Ventilgehäuse 2 durchsetzender Ventilkanal 14 einmündet, wobei in der Gehäuseausnehmung 3 ein eine Kolbenlängsachse 17 aufweisender hohler Steuerkolben 16 angeordnet ist, der zwecks Positionierung in unterschiedlichen Schaltstellungen in der Längsrichtung der Gehäuseausnehmung 3 axial verschiebbar ist und der über eine einen Kolbenhohlraum 32 umschließende, radial außen eine periphere Wandaußenfläche 28 aufweisende rohrförmige Umfangswand 27 verfügt, die mehrere mit axialem Abstand zueinander angeordnete Absperrabschnitte 42 und zwischen wenigstens zwei axial benachbarten Absperrabschnitten 42 einen Überströmabschnitt 43 aufweist, wobei die Umfangswand 27 im Bereich jedes Überströmabschnittes 43 mindestens eine bezüglich der axial benachbarten Absperrabschnitte 42 radial vertiefte Überströmaussparung 45 aufweist, wobei die rohrförmige Umfangswand 27 des Steuerkolbens 16 durchweg hohlzylindrisch ausgebildet ist und über eine sich ohne Abstufung auch axial über jeden Überströmabschnitt 43 hinweg erstreckende zylindrische Wandaußenfläche 28 verfügt, mit der er gleitverschieblich an den ihn umgebenden ringförmigen Dichtflächen 12 anliegt, wobei jede Überströmaussparung 45 als eine in den Kolbenhohlraum 32 einmündende fensterartige Wanddurchbrechung 44 der Umfangswand 27 ausgebildet ist, die sich nur ein Stückweit um die Kolbenlängsachse 17 herum erstreckt.

## Patentansprüche

1. Mehrwegeventil, mit einem Ventilgehäuse (2), in dem sich eine längliche Gehäuseausnehmung (3) befindet, die mit mehreren axial zueinander beabstandeten und jeweils nach radial innen weisenden ringförmigen Dichtflächen (12) ausgestattet ist, wobei wenigstens eine der ringförmigen Dichtflächen (12) zwischen zwei Ausnehmungsabschnitten (13) der Gehäuseausnehmung (3) angeordnet ist, in die jeweils mindestens ein das Ventilgehäuse (2) durchsetzender Ventilkanal (14) einmündet, wobei in der Gehäuseausnehmung (3) ein eine Kolbenlängsachse (17) aufweisender hohler Steuerkolben (16) angeordnet ist, der zwecks Positionierung in unterschiedlichen Schaltstellungen in der Längsrichtung der Gehäuseausnehmung (3) axial verschiebbar ist und der über eine einen Kolbenhohlraum (32) umschließende, radial außen eine periphere Wandaußenfläche (28) aufweisende rohrförmige Umfangswand (27) verfügt, die mehrere mit axialem Abstand zueinander angeordnete Absperrabschnitte (42) und zwischen wenigstens zwei axial benachbarten Absperrabschnitten (42) einen Überströmabschnitt (43) aufweist, wobei die Umfangswand (27) im Bereich jedes Überströmabschnittes (43) mindestens eine bezüglich der axial benachbarten Absperrabschnitte (42) radial vertiefte Überströmaussparung (45) aufweist, und wobei die rohrförmige Umfangswand (27) des Steuerkolbens (16) durchweg hohlzylindrisch ausgebildet ist und über eine sich ohne Abstufung auch axial über jeden Überströmabschnitt (43) hinweg erstreckende zylindrische Wandaußenfläche (28) verfügt, mit der der Steuerkolben (16) gleitverschieblich an den ihn umgebenden ringförmigen Dichtflächen (12) anliegt, wobei jede Überströmaussparung (45) als eine in den Kolbenhohlraum (32) einmündende fensterartige Wanddurchbrechung (44) der Umfangswand (27) ausgebildet ist, die sich nur ein Stückweit um die Kolbenlängsachse (17) herum erstreckt, **dadurch gekennzeichnet, dass** der Kolbenhohlraum (32) durch mindestens eine schottartige Trennwand (53) abgedichtet in mehrere axial aufeinanderfolgende Teilhohlräume (54) unterteilt ist, wobei die Umfangswand (27) über wenigstens zwei axial zwischen zwei Absperrabschnitten (42) angeordnete Überströmabschnitte (43) verfügt und die zu unterschiedlichen Überströmabschnitten (43) gehörenden Überströmaussparungen (45) in unterschiedliche Teilhohlräume (54) einmünden.

2. Mehrwegeventil nach Anspruch 1, **dadurch gekennzeichnet, dass** die hohlzylindrische Umfangswand (27) drei mit axialem Abstand zueinander angeordnete Absperrabschnitte (42) aufweist, wobei zwischen dem mittleren Absperrabschnitt (42, 42a) und jedem der beiden äußeren Absperrabschnitte (42, 42b, 42c) ein mit mindestens einer Überströmaussparung (45) versehener Überströmabschnitt (43) angeordnet ist.

3. Mehrwegeventil nach Anspruch 1 oder 2, **dadurch gekennzeichnet, dass** sich mindestens eine und zweckmäßigerweise jede Überströmaussparung (45) über einen Umfangswinkel von weniger als 180° um die Kolbenlängsachse (17) herum erstreckt.

4. Mehrwegeventil nach einem der Ansprüche 1 bis 3, **dadurch gekennzeichnet, dass** mindestens eine und zweckmäßigerweise jede eine Überströmaussparung (45) bildende Wanddurchbrechung (44) eine rechteckige Kontur hat.

5. Mehrwegeventil nach einem der Ansprüche 1 bis 4, **dadurch gekennzeichnet, dass** mindestens ein und zweckmäßigerweise jeder Überströmabschnitt (43) über mehrere in der Umfangsrichtung (46) der Umfangswand (27) verteilt angeordnete, jeweils als eine fensterartige Wanddurchbrechung (44) ausgebildete Überströmaussparungen (45) verfügt.

6. Mehrwegeventil nach einem der Ansprüche 1 bis 5, **dadurch gekennzeichnet, dass** mindestens ein und zweckmäßigerweise jeder Überströmabschnitt (43) über genau zwei jeweils als eine fensterartige Wanddurchbrechung (44) ausgebildete Überströmaussparungen (45) verfügt, die sich bezüglich der Kolbenlängsachse (17) diametral gegenüberliegen.

7. Mehrwegeventil nach Anspruch 5 oder 6, **dadurch gekennzeichnet, dass** sämtliche zum gleichen Überströmabschnitt (43) gehörenden Überströmaussparungen (45) in ein und denselben Teilhohlraum (54) einmünden.

8. Mehrwegeventil nach einem der Ansprüche 1 bis 7, **dadurch gekennzeichnet, dass** die mindestens eine Überströmaussparung (45) mindestens eines Überströmabschnittes (43) in einen Teilhohlraum (54) einmündet, dessen Länge der Länge des Überströmabschnittes (43) entspricht.

9. Mehrwegeventil nach einem der Ansprüche 1 bis 8, **dadurch gekennzeichnet, dass** der Kolbenhohlraum (32) durch mindestens eine Trennwand (53) in mehrere Teilhohlräume (54) unterteilt ist, wobei in mindestens einen dieser Teilhohlräume (54) keine Überströmaussparung (45) einmündet.

10. Mehrwegeventil nach einem der Ansprüche 1 bis 9, **dadurch gekennzeichnet, dass** der Kolbenhohlraum (32) an wenigstens einer und zweckmäßigerweise an jeder axialen Stirnseite durch eine mit der Umfangswand (27) verbundene Abschlusswand (36) verschlossen ist, wobei zweckmäßigerweise mindestens eine Abschlusswand (36) des Steuerkolbens (16) stoffschlüssig mit der Umfangswand (27) verbunden oder einstückig mit der Umfangswand (27) ausgebildet ist.

11. Mehrwegeventil nach einem der Ansprüche 1 bis 10, **dadurch gekennzeichnet, dass** der Kolbenhohlraum (32) mindestens einen wenigstens ein Funktionsmittel (56) aufnehmenden Funktionsraum (55) bildet, wobei mindestens ein Funktionsmittel (56) zweckmäßigerweise ein Positionserfassungsmittel und/oder ein Sensormittel und/oder ein Ventilmittel ist.

12. Mehrwegeventil nach einem der Ansprüche 1 bis 11, **dadurch gekennzeichnet, dass** die Umfangswand (27), zweckmäßigerweise abgesehen von den die mindestens eine Überströmaussparung (45) umrahmenden Randbereichen, durchgängig über die gleiche Wanddicke verfügt und/oder dass zumindest die Umfangswand (27) und zweckmäßigerweise der gesamte Steuerkolben (16) aus Kunststoffmaterial besteht.

13. Mehrwegeventil nach einem der Ansprüche 1 bis 12, **dadurch gekennzeichnet, dass** die ringförmigen Dichtflächen (12) von am Ventilgehäuse (3) fixierten ringförmigen Dichtelementen (5) gebildet sind, die zweckmäßigerweise aus einem gummielastischen Material bestehen.

14. Mehrwegeventil nach einem der Ansprüche 1 bis 13, **dadurch gekennzeichnet, dass** die mindestens eine Überströmaussparung (45) mindestens eines Überströmabschnittes (43) in Achsrichtung der Kolbenlängsachse (17) eine größere Länge hat als wenigstens eine der ringförmigen Dichtflächen (12), derart, dass in einer Position des Steuerkolbens (16), in der der Überströmabschnitt (43) von dieser ringförmigen Dichtfläche (12) umschlossen ist, die ringförmige Dichtfläche (12) im Bereich der Überströmaussparung (45) frei liegt und die Überströmaussparung (45) axial beidseits über die ringförmige Dichtfläche (12) hinausragt, um eine freie Fluidverbindung zwischen den beiden die Dichtfläche (12) axial beidseits flankierenden Ausnehmungsabschnitten (13) herzustellen.

## Claims

1. Multiway valve with a valve casing (2) in which is located an elongated casing recess (3) equipped with several annular sealing faces (12), spaced axially apart and each facing radially inwards, wherein at least one of the annular sealing faces (12) is arranged between two recess sections (13) of the casing recess (3), into which opens in each case at least one valve passage (14) passing through the valve casing (2), wherein there is located in the casing recess (3) a hollow control piston (16) with a piston longitudinal axis (17), and which for the purpose of positioning may be shifted axially in the longitudinal direction of the casing recess (3) and which has a tubular peripheral wall (27) encompassing a piston cavity (32) and with a peripheral wall outer surface (28) on the radial outside, and which has several shut-off sections (42) spaced axially apart from one another and an overflow section (43) between at least two axially adjacent shut-off sections (42), wherein the peripheral wall (27) has in the area of each overflow section (43) at least one overflow recess (45), radially deepened relative to the axially adjacent shut-off sections (42), and wherein the tubular peripheral wall (27) of the control piston (16) is hollow-cylindrical throughout and has a cylindrical wall outer surface (28) extending without steps also axially over each overflow section (43) and by which the control piston (16) fits up with sliding against the annular sealing faces (12) surrounding it, wherein each overflow recess (45) is in the form of a window-like wall opening (44) of the peripheral wall (27) leading into the piston cavity (32) and extending only a short distance around the piston longitudinal axis (17), **characterised in that** the piston cavity (32) is divided by at least one bulkhead-like partition (53) into several axially consecutive sub-cavities (54), wherein the peripheral wall (27) has at least two overflow sections (43) arranged axially between two shut-off sections (42) and the overflow recesses (45) belonging to different overflow sections (43) lead into different sub-cavities.

2. Multiway valve according to claim 1, **characterised in that** the hollow-cylindrical peripheral wall (27) has three shut-off sections (42) arranged with axial clearance from one another, wherein an overflow section (43) with at least one overflow recess (45) is arranged between the centre shut-off section (42, 42a) and each of the two outer shut-off sections (42, 42b, 42c).

3. Multiway valve according to claim 1 or 2, **characterised in that** at least one and expediently each overflow recess (45) extends around the piston longitudinal axis (17) by a circumferential angle of less than 180°.

4. Multiway valve according to any of claims 1 to 3, **characterised in that** at least one and expediently each wall opening (44) forming an overflow recess (45) has a rectangular contour.

5. Multiway valve according to any of claims 1 to 4, **characterised in that** at least one and expediently each overflow section (43) has several overflow recesses (45), each in the form of a window-like wall opening (44), distributed in the circumferential direction (46) of the peripheral wall (27).

6. Multiway valve according to any of claims 1 to 5, **characterised in that** at least one and expediently each overflow section (43) has precisely two overflow recesses (45), each in the form of a window-like wall opening (44), and lying diametrically opposite one another relative to the piston longitudinal axis (17).

7. Multiway valve according to claim 5 or 6, **characterised in that** all overflow recesses (45) belonging to the same overflow section (43) lead into one and the same sub-cavity (54).

8. Multiway valve according to any of claims 1 to 7, **characterised in that** the overflow recess or recesses (45) of at least one overflow section (43) lead into a sub-cavity (54) with a length corresponding to the length of the overflow section (43).

9. Multiway valve according to any of claims 1 to 8, **characterised in that** the piston cavity (32) is divided by at least one partition (53) into several sub-cavities (54), wherein no overflow recess (45) leads into at least one of these sub-cavities (54).

10. Multiway valve according to any of claims 1 to 9, **characterised in that** the piston cavity (32) is closed on at least one and expediently at each axial end face by an end wall (36) joined to the peripheral wall (27), wherein expediently at least one end wall (36) of the control piston (16) is joined to the peripheral wall (27) by material bonding or is integral with the peripheral wall (27).

11. Multiway valve according to any of claims 1 to 10, **characterised in that** the piston cavity (32) forms at least one function chamber (55) accommodating at least one function means (56), wherein expediently at least one function means (56) is a position detection device and/or a sensor means and/or a valve means.

12. Multiway valve according to any of claims 1 to 11, **characterised in that** the peripheral wall (27) expediently, apart from the edge areas framing the overflow recess or recesses (45), has the same wall thickness throughout, and/or that at least the peripheral wall (27) and expediently the whole control piston (16) are made of plastic material.

13. Multiway valve according to any of claims 1 to 12, **characterised in that** the annular sealing faces (12) are formed by annular sealing elements (5) fixed to the valve casing (3) and expediently made of a rubber-elastic material.

14. Multiway valve according to any of claims 1 to 13, **characterised in that** the overflow recess or recesses (45) of at least one overflow section (43) has or have in the axial direction of the piston longitudinal axis (17) a greater length than at least one of the annular sealing faces (12) in such a way that, in a position of the control piston (16) in which the overflow section (43) is encompassed by this annular sealing face (12), the annular sealing face (12) is exposed in the area of the overflow recess (45) and the overflow recess (45) extends outwards axially either side of the annular sealing face (12), in order to create a free fluidic connection between the two recess sections (13) axially flanking the sealing face (12) on either side.

## Revendications

1. Vanne à plusieurs voies, avec un carter de vanne (2), dans lequel se trouve un évidement de carter (3) allongé, qui est équipé de plusieurs surfaces étanches (12) de forme annulaire espacées les unes par rapport aux autres de manière axiale et pointant respectivement vers l'intérieur radialement, dans laquelle au moins une des surfaces étanches (12) de forme annulaire est disposée entre deux sections d'évidement (13) de l'évidement de carter (3), dans lesquelles débouche respectivement au moins un canal de vanne (14) traversant le carter de vanne (2), dans laquelle est disposé dans l'évidement de carter (3) un piston de commande (16) creux présentant un axe longitudinal de piston (17), qui peut être coulissé de manière axiale dans la direction longitudinale de l'évidement de carter (3) aux fins du positionnement dans différentes positions de commutation et qui dispose d'une paroi périphérique (27) de forme tubulaire entourant un espace creux de piston (32), présentant à l'extérieur radialement une surface extérieure de paroi (28) périphérique, qui présente plusieurs sections d'arrêt (42) disposées les unes par rapport aux autres à une distance axiale et, entre au moins deux sections d'arrêt (42) axialement adjacentes, une section de trop-plein (43), dans laquelle la paroi périphérique (27) présente, dans la zone de chaque section de trop-plein (43), au moins un renfoncement de trop-plein (45) creusé radialement par rapport aux sections d'arrêt (42) axialement adjacentes, et dans laquelle la paroi périphérique (27) de forme tubulaire du piston de commande (16) est réalisée systématiquement de manière cylindrique creuse et dispose d'une surface extérieure de paroi (28) cylindrique s'étendant sans palier également axialement au-delà de chaque section de trop-plein (43), avec laquelle le piston de commande (16) repose de manière mobile par glissement contre les surfaces étanches (12) de forme annulaire l'entourant, dans laquelle chaque renfoncement de trop-plein (45) est réalisé en tant qu'ajour de paroi (44) de type fenêtre, débouchant dans l'espace creux de piston (32), de la paroi périphérique (27), qui s'étend seulement légèrement tout autour de l'axe longitudinal de piston (17), **caractérisée en ce que** l'espace creux de piston (32) est divisé de manière étanchéifiée par au moins une paroi de séparation (53) de type cloison en plusieurs espaces creux partiels (54) se suivant les uns les autres axialement, dans laquelle la paroi périphérique (27) dispose d'au moins deux sections de trop-plein (43) disposées axialement entre deux sections d'arrêt (42) et les renfoncements de trop-plein (45) faisant partie de sections de trop-plein (43) différentes débouchent dans différents espaces creux partiels (54).

2. Vanne à plusieurs voies selon la revendication 1, **caractérisée en ce que** la paroi périphérique (27) cylindrique creuse présente trois sections d'arrêt (42) disposées les unes par rapport aux autres à une distance axiale, dans laquelle une section de trop-plein (43) pourvue d'au moins un renfoncement de trop-plein (45) est disposée entre la section d'arrêt (42, 42a) centrale et chacune des deux sections d'arrêt (42, 42b, 42c) extérieures.

3. Vanne à plusieurs voies selon la revendication 1 ou 2, **caractérisée en ce qu'**au moins un et de manière appropriée chaque renfoncement de trop-plein (45) s'étend tout autour de l'axe longitudinal de piston (17) sur un angle périphérique inférieur à 180°.

4. Vanne à plusieurs voies selon la revendication 1 à 3, **caractérisée en ce qu'**au moins un ajour de paroi (44) formant un et de manière appropriée chaque renfoncement de trop-plein (45) a un contour rectangulaire.

5. Vanne à plusieurs voies selon l'une quelconque des revendications 1 à 4, **caractérisée en ce qu'**au moins une et de manière appropriée chaque section de trop-plein (43) dispose de plusieurs renfoncements de trop-plein (45) disposés de manière répartie dans la direction périphérique (46) de la paroi périphérique (27), réalisés respectivement en tant qu'ajour de paroi (44) de type fenêtre.

6. Vanne à plusieurs voies selon l'une quelconque des revendications 1 à 5, **caractérisée en ce qu'**au moins une et de manière appropriée chaque section de trop-plein (43) dispose de précisément deux renfoncements de trop-plein (45) réalisés respectivement en tant qu'ajour de paroi (44) de type fenêtre, qui sont diamétralement opposés par rapport à l'axe longitudinal de piston (17).

7. Vanne à plusieurs voies selon la revendication 5 ou 6, **caractérisée en ce que** tous les renfoncements de trop-plein (45) faisant partie de la même section de trop-plein (43) débouchent dans un seul et même espace creux partiel (54).

8. Vanne à plusieurs voies selon l'une quelconque des revendications 1 à 7, **caractérisée en ce que** l'au moins un renfoncement de trop-plein (45) d'au moins une section de trop-plein (43) débouche dans un espace creux partiel (54), dont la longueur correspond à la longueur de la section de trop-plein (43).

9. Vanne à plusieurs voies selon l'une quelconque des revendications 1 à 8, **caractérisée en ce que** l'espace creux de piston (32) est divisé par au moins une paroi de séparation (53) en plusieurs espaces creux partiels (54), dans laquelle aucun renfoncement de trop-plein (45) ne débouche dans au moins un desdits espaces creux partiels (54).

10. Vanne à plusieurs voies selon l'une quelconque des revendications 1 à 9, **caractérisée en ce que** l'espace creux de piston (32) est fermé au niveau d'au moins un et de manière appropriée au niveau de chaque côté frontal axial par une paroi de terminaison (36) reliée à la paroi périphérique (27), dans laquelle de manière appropriée au moins une paroi de terminaison (36) du piston de commande (16) est reliée par liaison de matière à la paroi périphérique (27) ou est réalisée d'un seul tenant avec la paroi périphérique (27).

11. Vanne à plusieurs voies selon l'une quelconque des revendications 1 à 10, **caractérisée en ce que** l'espace creux de piston (32) forme au moins un espace fonctionnel (55) recevant au moins un moyen fonctionnel (56), dans laquelle au moins un moyen fonctionnel (56) est de manière appropriée un moyen de détection de position et/ou un moyen de capteur et/ou un moyen de vanne.

12. Vanne à plusieurs voies selon l'une quelconque des revendications 1 à 11, **caractérisée en ce que** la paroi périphérique (27), de manière appropriée abstraction faite des zones de bord encadrant l'au moins un renfoncement de trop-plein (45), dispose en continu de la même épaisseur de paroi, et/ou qu'au moins la paroi périphérique (27) et de manière appropriée l'ensemble du piston de commande (16) sont constitués d'un matériau en matière plastique.

13. Vanne à plusieurs voies selon l'une quelconque des revendications 1 à 12, **caractérisée en ce que** les surfaces étanches (12) de forme annulaire sont formées par des éléments étanches (5) de forme annulaire fixés au niveau du carter de vanne (3), qui sont constitués de manière appropriée d'un matériau élastique comme du caoutchouc.

14. Vanne à plusieurs voies selon l'une quelconque des revendications 1 à 13, **caractérisée en ce que** l'au moins un renfoncement de trop-plein (45) d'au moins une section de trop-plein (43) a dans une direction axiale de l'axe longitudinal de piston (17) une longueur plus grande qu'au moins une des surfaces étanches (12) de forme annulaire, de telle manière que dans une position du piston de commande (16), dans laquelle la section de trop-plein (43) est entourée par ladite surface étanche (12) de forme annulaire, la surface étanche (12) de forme annulaire est dégagée dans la zone du renfoncement de trop-plein (45) et le renfoncement de trop-plein (45) dépasse axialement des deux côtés de la surface étanche (12) de forme annulaire pour établir une communication fluidique libre entre les deux sections d'évidement (13) flanquant axialement des deux côtés la surface étanche (12).
